**Europäisches Patentamt**

**European Patent Office**

**Office européen des brevets**

(11) Veröffentlichungsnummer: **0 187 223**

**A2**

## (12) EUROPÄISCHE PATENTANMELDUNG

(21) Anmeldenummer: 85114344.6

(22) Anmeldetag: 12.11.85

(51) Int. Cl.⁴: **G 02 F 1/133**

(30) Priorität: 20.12.84 DE 3446536

(43) Veröffentlichungstag der Anmeldung:
16.07.86 Patentblatt 86/29

(84) Benannte Vertragsstaaten:
DE FR GB IT SE

(71) Anmelder: **VDO Adolf Schindling AG**
Gräfstrasse 103
D-6000 Frankfurt/Main(DE)

(72) Erfinder: **Fertig, Werner, Dr.**
Paul-Wagner-Strasse 66
D-6100 Darmstadt(DE)

(74) Vertreter: **Klein, Thomas, Dipl.-Ing. (FH)**
Sodener Strasse 9 Postfach 6140
D-6231 Schwalbach a. Ts.(DE)

(54) **Multiplexbare Flüssigkristallzelle.**

(57) Die Erfindung betrifft eine multiplexbare Flüssigkristallzelle mit zwei im Abstand zueinander angeordneten Substraten 1 und 2 die zwischen sich einen mit Flüssigkristallsubstanz gefüllten Zellenraum 3 bilden. Zellenraumseitig sind
auf dem einen Substrat 1 Datenleitungen 4 und damit
verbundene Elektroden 5 angeordnet, die mit zellenraumseitig auf dem zweiten Substrat 2 angeordneten, den Elektroden
5 gegenüberliegenden Bildelektroden 7 Bildelemente bilden.
Die Bildelektroden 7 sind über Metall-Isolator-Metall-
Elemente mit ebenfalls auf dem zweiten Substrat 2 angeordneten Datenleitungen 6 verbunden. Die Datenleitungen 4
und 6 sind über wenigstens zwei Metall-Isolator-Metall-
Elemente gleicher Aufbaustruktur mit einem Bildelement
verbunden, wobei in Stromdurchflußrichtung die Aufbaustruktur des einen Metall-Isolator-Metall-Elements der Aufbaustruktur des anderen Metall-Isolator-Metall-Elements
entgegengesetzt angeordnet ist.

Fig.1

VDO Adolf Schindling AG          Gräfstraße 103
                                 6000 Frankfurt/Main

                                 G-R Kl-kl / 1809

                                 12. Dez. 1984

## Multiplexbare Flüssigkristallzelle

Die Erfindung betrifft eine multiplexbare Flüssigkristallzelle mit zwei im Abstand zueinander angeordneten Substraten, die zwischen sich einen mit Flüssigkristallsubstanz gefüllten Zellenraum bilden, mit
zellenraumseitig auf dem einen Substrat angeordneten,
mit Datenleitungen verbundenen Elektroden, die mit
zellenraumseitig auf dem zweiten Substrat angeordneten, den Elektroden gegenüberliegenden Bildelektroden
Bildelemente bilden, wobei die Bildelektroden über
Metall-Isolator-Metall-Elemente mit ebenfalls auf dem
zweiten Substrat angeordneten Datenleitungen verbunden
sind.

Aufgrund der Wachstumsrichtung beim Aufbringen der
Schichten des Metall-Isolator-Metall-Elements kommt
es bei derartigen bekannten Flüssigkristallzellen zu
einer Unsymmetrie in der Strom/Spannungskennlinie der
an sich mit symmetrischer Wechselspannung betriebenen
Flüssigkristallzelle. Dadurch ergibt sich eine Gleichspannungskomponente, die vermieden werden muß, damit es nicht nach und nach zu einer Zersetzung der Bildelektrode und damit zu einer Reduzierung deren Lebensdauer kommt.

Um eine solche Zerstörung zu vermeiden, ist es bekannt
die Flüssigkristallzelle nicht mit normaler symmetrischer
Wechselspannung, sondern mit unsymmetrisch aufbereiteter
Wechselspannung zu betreiben.

Dies ist aber sehr aufwendig.

Aufgabe der Erfindung ist es daher, eine multiplexbare
Flüssigkristallzelle nach dem Oberbegriff zu schaffen,
die bei einfachem Aufbau mit normaler symmetrischer
Wechselspannung betreibbar ist.

Diese Aufgabe wird erfindungsgemäß dadurch gelöst, daß
die Datenleitungen über wenigstens zwei Metall-Isolator-
Metall-Elemente gleicher Aufbaustruktur mit einem Bildelement verbunden sind, wobei in Stromdurchflußrichtung
die Aufbaustruktur des einen Metall-Isolator-Metall-Elements der Aufbaustruktur des anderen Metall-Isolator-Metall-
Elements entgegengesetzt angeordnet ist. Bei einer derartigen Ausbildung wird die beim Stromdurchfluß durch das
erste Metall-Isolator-Metall-Element entstandene Unsymmetrie
durch den Stromdurchfluß durch das zweite Metall-Isolator-
Metall-Element wieder ausgeglichen, da die Richtungen des
Stromdurchflusses bei den beiden Metall-Isolator-Metall-
Elementen jeweils in entgegengesetzter Richtung in Bezug
auf dessen Aufbaustruktur erfolgt. Da normalerweise die
Schichten der Metall-Isolator-Metall-Elemente vom
Substrat aus nacheinander sich überdeckend aufgebaut sind,
brauchen nur zwei gleiche Metall-Isolator-Metall-Elemente nacheinander entgegengesetzt ihrer Aufbaurichtung stromdurchflossen werden.

Ein größerer Herstellungsaufwand ist nicht erforderlich,
da im wesentlichen nur die Masken für die Herstellung
der Schichten die entsprechenden zusätzlichen Ausnehmungen aufweisen müssen.

Ein weiterer Vorteil liegt darin, daß Toleranzschwankungen im Schichtenaufbau der Metall-Isolator-Metall-
Elemente, die zu Parameterschwankungen führen würden,
durch die erfindungsgemäß angeordneten Metall-Isolator-
Metall-Elemente reduziert werden. Bei zwei Metall-
Isolator-Metall-Elementen kommt es dabei zu einer Reduzierung der Parameterschwankungen mit dem Faktor 0,7,
bei vier Metall-Isolator-Metall-Elementen mit dem
Faktor 0,5 usw.

Diese statistische Fehlerreduzierung führt auch zu einer
Vermittlung der Ansteuerungsschwankungen, was zu einer
Angleichung der Leuchtstärke der durch die einzelnen
Bildelemente erzeugten Bildpunkte aneinander und zu einer
Vergleichmäßigung des Ansteuerzeitraumes führt.

In einer Ausbildungsform können die beiden Metall-Isolator-Metall-Elemente in der Verbindung der Bildelektrode
mit der ihr zugeordneten Datenleitung angeordnet sein.

Eine zweite Ausbildungsmöglichkeit besteht darin, daß
die beiden Metall-Isolator-Metall-Elemente in der Verbindung der Elektrode mit der ihr zugeordneten Datenleitung angeordnet sind.

In einer dritten Ausbildungsform kann die Elektrode und die Bildelektrode jeweils über ein Metall-Isolator-Metall-Element mit den ihnen zugeordneten Datenleitungen verbunden sein.

Eine besonders gute Reduzierung der toleranzbedingten Parameterschwankungen wird erreicht, wenn die Elektrode und die Bildelektrode jeweils über mehrere Metall-Isolator-Metall-Elemente mit den ihnen zugeordneten Datenleitungen verbunden sind.

Besteht das auf einem Substrat angeordnete Metall-Isolator-Metall-Element aus einer auf der Elektrode bzw. der Bildelektrode aufgebrachten Isolatorschicht, auf der ein zur Datenleitung führender Verbindungskotakt angebracht ist, so lassen sich sowohl die einzelnen Schichten der Metall-Isolator-Metall-Elemente als auch die Schicht des Verbindungskontakts leicht und ohne großen Aufwand herstellen.

Dasselbe gilt auch, wenn das auf einem Substrat angeordnete Metall-Isolator-Metall-Element aus einer auf der Datenleitung angeordneten Isolatorschicht besteht, auf der ein zur Elektrode bzw. der Bildelektrode führender Verbindungskotakt aufgebracht ist.

Ist auf einem Substrat der Verbindungskontakt sowohl mit der Datenleitung als auch mit der Elektrode bzw. der Bildelektrode jeweils über ein Metall-Isolator-Metall-Element verbunden, so ist vorzugsweise zwischen der Elektrode bzw. der Bildelektrode und der Isolierschicht eine Schicht gleichen Materials und gleicher Struktur wie der Datenleitung im vom Verbindungskontakt bedeckten Bereich angeordnet. Damit wird erreicht, daß die Strukturen der beiden Metall-Isolator-Metall-Elemente gleich sind.

Ausführungsbeispiele der Erfindung sind in der Zeichnung dargestellt und werden im folgenden näher beschrieben. Es zeigen

Figur 1 einen ausschnittsweisen Querschnitt einer Flüssigkristallzelle im Bereich der Metall-Isolator-Metall-Elemente,

Figur 2 einen ausschnittsweisen Querschnitt eines zweiten Ausführungsbeispiels einer Flüssigkristallzelle im Bereich der Metall-Isolator-Metall-Elemente,

Figur 3 einen ausschnittsweisen Querschnitt eines dritten Ausführungsbeispiels einer Flüssigkristallzelle im Bereich der Metall-Isolator-Metall-Elemente,

Figur 4 eine Schaltung der Flüssigkristallzelle nach Figur 1,

Figur 5 eine Schaltung der Flüssigkristallzelle nach Figur 2.

Die dargestellten Flüssigkristallzellen weisen ein erstes Substrat 1 und ein zweites Substrat 2 auf, die zwischen sich einen Zellenraum 3 bilden, der mit Flüssigkristallsubstanz gefüllt ist. Auf dem Substrat 1 ist eine Datenleitung 4 und eine Elektrode 5 und auf dem anderen Substrat 2 eine Datenleitung 6 und eine Bildelektrode 7 angeordnet, wobei zwischen der Datenleitung 4 und der Elektrode 5 sowie zwischen der Datenleitung 6 und der Bildelektrode 7 jeweils ein Abstand vorhanden ist. Die sich gegenüberliegend angeordneten Elektrode 5 und Bildelektrode 7 bilden ein Bildelement.

Die Elektrode 5 ist über einenVerbindungskontakt 8 mit der Datenleitung 4 und die Bildelektrode 7 über einen Verbindungskontakt 9 mit der Datenleitung 6 verbunden.

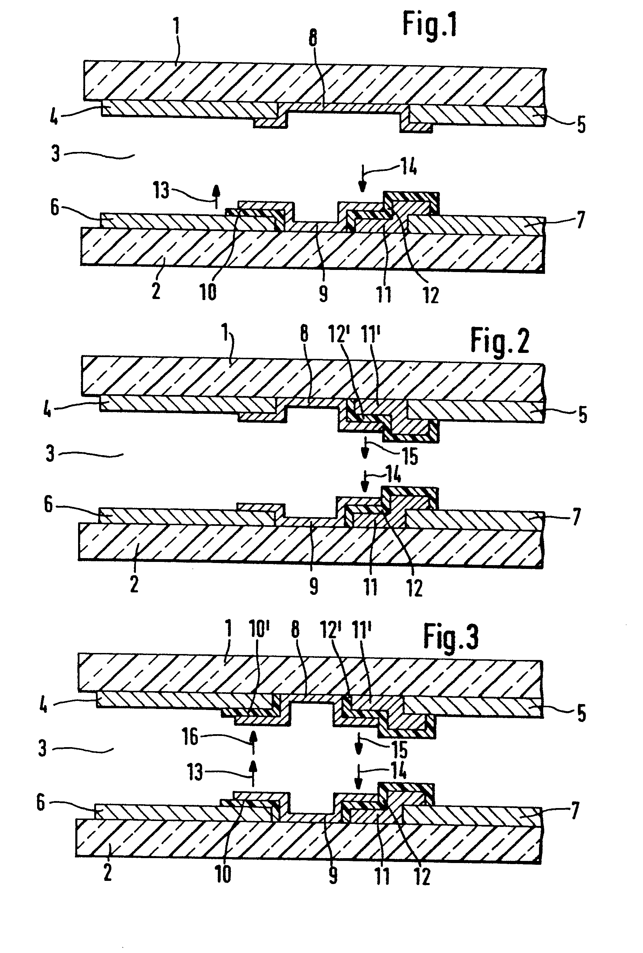

In Figur 1 ist zwischen dem Verbindungskontakt 9 und der Datenleitung 6 eine Isolatorschicht 10 angeordnet, so daß diese Schichten ein Metall-Isolator-Metall-Element bilden.

Der Rand der Bildelektrode 7 ist von einer Schicht 11 gleichen Materials und gleicher Struktur wie der Datenleitung 6 bedeckt. Zusammen mit einer die Schicht 11 überdeckenden Isolatorschicht 12 und dem auf der Isolatorschicht 12 angeordneten Verbindungskontakt 9 ist ein zweites Metall-Isolator-Metall-Element gebildet, wobei ausgehend von dem Substrat 2 die Aufbaustruktur der beiden Metall-Isolator-Metall-Elemente gleich ist.

Bei Ansteuerung erfolgt ein Stromfluß von der Datenleitung 6 in Richtung des Pfeils 13 in den Verbindungskontakt 9 und in Richtung des Pfeils 14 von diesem zur Schicht 11 und der Bildelektrode 7. Von dort geht der Stromfluß weiter zur Elektrode 5 und über den Verbindungskontakt 8 zur Datenleitung 4.

In Figur 2 ist der Verbindungskontakt 9 direkt auf der Datenleitung 6 aufgebracht, während er mit der Bildelektrode 7 auf die gleiche Weise verbunden ist wie in Figur 1.

Die Verbindung des Verbindungskontakts 8 mit der Datenleitung 4 und der Elektrode 5 entspricht der Verbindung des Verbindungskontakts 9 mit der Datenleitung 6 und der Bildelektrode 7.

Es ist somit zwischen dem Verbindungskontakt 9 und der Bildelektrode 7 sowie zwischen dem Verbindungskontakt 8 und der Elektrode 5 jeweils ein Metall-Isolator-Metall-Element gebildet.

Bei Ansteuerung erfolgt ein Stromfluß von der Datenleitung 6 durch den Verbindungskontakt 9 und in Richtung des Pfeils 13 zur Schicht 11 sowie zur Bildelektrode 7. Von dort geht der Stromfluß weiter zur Elektrode 5 und zur Schicht 11' sowie entlang des Pfeils 15 zum Verbindungskontakt 8 und von diesem zur Datenleitung 4.

In Figur 3 ist die Anordnung der auf das Substrat 2 aufgebrachten Schichten der Anordnung in Figur 1 gleich.

Da auch die Anordnung der Schichten auf dem Substrat 1 den Schichten auf dem Substrat 2 entspricht, sind sowohl zwischen der Datenleitung 6 und dem Verbindungskontakt 9 sowie zwischen dem Verbindungskontakt 9 und der Bildelektrode 7 als auch zwischen der Elektrode 5 und dem Verbindungskontakt 8 sowie zwischen dem Verbindungskontakt 8 und der Datenleitung 4 Metall-Isolator-Metall-Elemente gebildet.

Dadurch erfolgt bei Ansteuerung ein Stromfluß von der Datenleitung 6 in Richtung des Pfeils 13 zum Verbindungskontakt 9 und von diesem in Richtung des Pfeils 14 zur Schicht 11 und zur Bildelektrode 7. Von dort geht der Stromfluß weiter zur Elektrode 5 und durch die Schicht 11' in Richtung des Pfeils 15 zum Verbindungskontakt 8 sowie von diesem in Richtung des Pfeils 16 der Datenleitung 4.

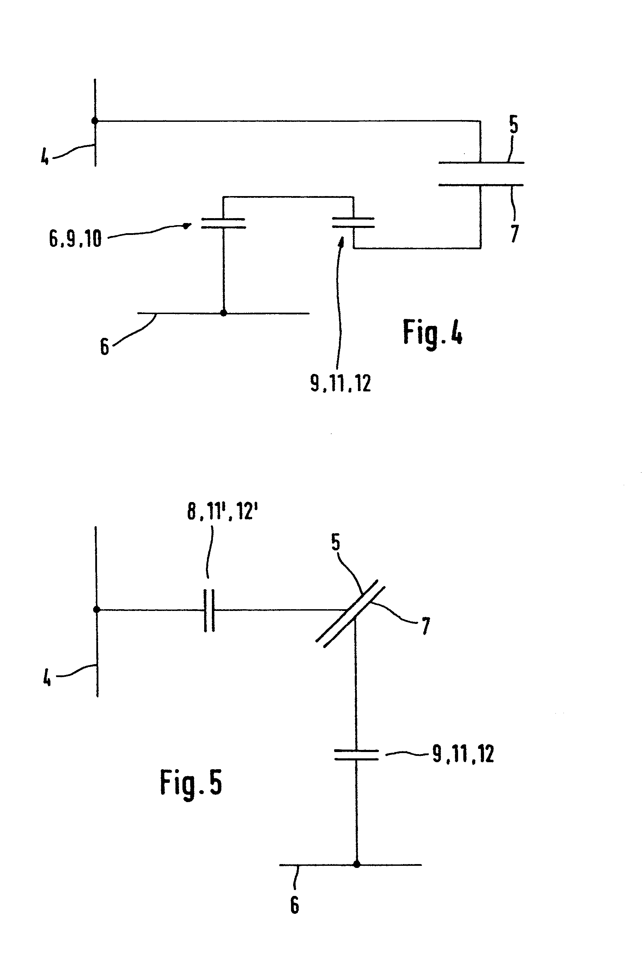

In den Figuren 5 und 6 sind die Ausführungsbeispiele der Figuren 1 und 2 als Schaltplan dargestellt, wobei die einzelnen Bauteile mit den gleichen Bezugszeichen versehen sind.

0187223

VDO Adolf Schindling AG          Gräfstraße 103
                                 6000 Frankfurt/Main
                                 G-R Kl-kl / 1809
                                 12. Dez. 1984


Patentansprüche

1. Multiplexbare Flüssigkristallzelle mit zwei im
   Abstand zueinander angeordneten Substraten, die
   zwischen sich einen mit Flüssigkristallsubstanz
   gefüllten Zellenraum bilden, mit zellenraumseitig
   auf dem einen Substrat angeordneten, mit Datenleitungen verbundenen Elektroden, die mit zellenraumseitig auf dem zweiten Substrat angeordneten,
   den Elektroden gegenüberliegenden Bildelektroden
   Bildelemente bilden, wobei die Bildelektroden über
   Metall-Isolator-Metall-Elemente mit ebenfalls auf
   dem zweiten Substrat angeordneten Datenleitungen
   verbunden sind, dadurch gekennzeichnet, daß die
   Datenleitungen (4, 6) über wenigstens zwei Metall-
   Isolator-Metall-Elemente gleicher Aufbaustruktur
   mit einem Bildelement verbunden sind, wobei in
   Stromdurchflußrichtung die Aufbaustruktur des
   einen Metall-Isolator-Metall-Elements der Aufbaustruktur
   des anderen Metall-Isolator-Metall-Elements entgegengesetzt angeordnet ist.

2. Flüssigkristallzelle nach Anspruch 1, dadurch gekennzeichnet, daß die beiden Metall-Isolator-Metall-Elemente in der Verbindung der Bildelektrode (7) mit der ihr zugeordneten Datenleitung (6) angeordnet sind.

3. Flüssigkristallzelle nach Anspruch 1, dadurch gekennzeichnet, daß die beiden Metall-Isolator-Metall-Elemente in der Verbindung der Elektrode (5) mit der ihr zugeordneten Datenleitung (4) angeordnet sind.

4. Flüssigkristallzelle nach Anspruch 1, dadurch gekennzeichnet, daß die Elektrode (5) und die Bildelektrode (7) jeweils über ein Metall-Isolator-Metall-Element mit den ihnen zugeordneten Datenleitungen (4, 6) verbunden sind.

5. Flüssigkristallzelle nach einem der vorhergehenden Ansprüche, dadurch gekennzeichnet, daß die Elektrode (5) und die Bildelektrode (7) jeweils über mehrere Metall-Isolator-Metall-Elemente mit den ihnen zugeordneten Datenleitungen (4, 6) verbunden sind.

6. Flüssigkristallzelle nach einem der vorhergehenden Ansprüche, dadurch gekennzeichnet, daß das auf einem Substrat (1, 2) angeordnete Metall-Isolator-Metall-Element aus einer auf der Elektrode (5) bzw. der Bildelektrode (7) aufgebrachten Isolatorschicht (12, 12') besteht, auf der ein zur Datenleitung (4, 6) führender Verbindungskontakt (8, 9) aufgebracht ist.

7. Flüssigkristallzelle nach einem der vorhergehenden Ansprüche, <u>dadurch gekennzeichnet</u>, daß das auf einem Substrat (1, 2) angeordnete Metall-Isolator-Metall-Element aus einer auf der Datenleitung (4, 6) angeordneten Isolatorschicht (10, 10') besteht, auf der ein zur Elektrode (5) bzw. der Bildelektrode (7) führender Verbindungskontakt (8, 9) aufgebracht ist.

8. Flüssigkristallzelle nach Anspruch 6 und 7, <u>dadurch gekennzeichnet</u>, daß zwischen der Elektrode (5) bzw. Bildelektrode (7) und der Isolatorschicht (12, 12') eine Schicht (11, 11') gleichen Materials und gleicher Struktur wie der Datenleitung (4, 6) im vom Verbindungskontakt (8, 9) bedeckten Bereich angeordnet ist.

**Fig.1**

**Fig.2**

**Fig.3**

Fig.4

Fig.5